# EUROPÄISCHE PATENTSCHRIFT

(11) **EP 4 059 761 B1**
(45) Veröffentlichungstag und Bekanntmachung des Hinweises auf die Patenterteilung: **29.04.2026**
(21) Anmeldenummer: 22162290.5
(22) Anmeldetag: 15.03.2022
(51) Int. Cl.: B60L 7/10, B60L 50/53, B60L 58/12, B60L 53/30, B60L 5/42

(54) **FAHRZEUG UND VERFAHREN ZUM BETREIBEN EINES FAHRZEUGS**
VEHICLE AND METHOD FOR OPERATING A VEHICLE
VÉHICULE ET PROCÉDÉ DE FONCTIONNEMENT D'UN VÉHICULE

(30) Priorität: 19.03.2021 DE 102021202690
(43) Veröffentlichungstag der Anmeldung: 21.09.2022
(73) Patentinhaber: Siemens Mobility GmbH, 80997 München (DE)
(72) Erfinder: Burg, Wilhelm, 96052 Bamberg (DE); Lottersberger, Christoph, 90459 Nürnberg (DE); Winterstein, Heiko, 91325 Adelsdorf (DE)
(74) Vertreter: Siemens Patent Attorneys

(56) Entgegenhaltungen:
- DE-A1- 102019 210 645
- JP-A- 2006 054 958
- US-A1- 2020 149 996
- US-B2- 9 545 854

## Beschreibung

Die Erfindung bezieht sich auf Fahrzeuge, insbesondere Schienenfahrzeuge, mit mindestens einem Stromabnehmer zur Aufnahme externer elektrischer Energie während des Befahrens eines elektrifizierten Streckenabschnitts und mindestens einem internen Energiespeicher, der gespeicherte Energie zum Befahren eines nachfolgenden nichtelektrifizierten Streckenabschnitts zur Verfügung stellen kann.

Schienenfahrzeuge mit Energiespeichern beispielsweise in Form von Batterien sind üblicherweise Batteriehybrid-Fahrzeuge, d.h. sie können als elektrisches Fahrzeug unter Oberleitung fahren und dabei die Batterie aufladen und auf nicht elektrifizierten Strecken mit gesenktem Stromabnehmer aus der Batterie gespeist fahren. Wenn die Batterie voll ist und das Fahrzeug unter Oberleitung elektrisch bremst, wird die Bremsenergie in das Oberleitungsnetz zurückgespeist.

Dokument JP 2006 054958 A offenbart ein elektrisches Fahrzeug für den Betrieb in einem oberleitungsfreien Verkehrssystem, wobei ein Energiespeicher des Fahrzeugs an Ladestationen abhängig von einem Energiebedarf für den Antrieb und Hilfsbetriebe geladen wird, und wobei die zu ladende Energie von einer Steuereinheit des Fahrzeugs auf Basis eines Bewegungs- und Regenerationsmusters bestimmt wird. Dokument DE 10 2019 210645 A1 offenbart ein Fahrzeug mit einem internen Energiespeicher, welcher durch Aufnahme externer elektrischer Energie über einen Stromabnehmer derart geladen wird, dass der Energiespeicher zum Fahrtbeginn mindestens eine Energiemenge für das Befahren eines nächsten Streckenabschnitts aufweist, wobei der Streckenabschnitt einen oder mehrere nichtelektrifizierte Unterabschnitte aufweist. Bekannt sind ferner die Dokumente US 2020/149996 A1 und US 9 545 854 B2.

Der Erfindung liegt die Aufgabe zugrunde, ein Fahrzeug anzugeben, bei dem ein Laden des internen Energiespeichers besonders effizient erfolgt.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in abhängigen Patentansprüchen angegeben.

Danach ist erfindungsgemäß vorgesehen, dass das Fahrzeug eine Ladesteuerungseinrichtung aufweist, die während der Fahrt auf dem elektrifizierten Streckenabschnitt unter Heranziehung des aktuellen Ladestatus des Energiespeichers und zumindest eines Bremsenergiewerts, der die bis zum Ende des elektrifizierten Streckenabschnitts durch Bremsen noch regenerierbare und in den Energiespeicher einspeisbare Bremsenergie angibt, den mindestens einen internen Energiespeicher derart lädt, dass dieser bei Erreichen des nachfolgenden nichtelektrifizierten Streckenabschnitts unter Annahme einer Rückspeicherung der vom Bremsenergiewert angegebenen regenerierbaren Bremsenergie einen vorgegebenen Sollenergiewert aufweist.

Ein wesentlicher Vorteil des erfindungsgemäßen Fahrzeugs ist darin zu sehen, dass durch die erfindungsgemäß vorgesehene Berücksichtigung des Bremsenergiewerts, der die bis zum Ende des elektrifizierten Streckenabschnitts durch Bremsen voraussichtlich noch regenerierbare und in den Energiespeicher einspeisbare Bremsenergie angibt, ein optimales Laden mit Blick auf die zur Verfügung stehende Bremsenergie erreicht werden kann. So lässt sich beispielsweise vermeiden, dass unnötig Bremsenergie in das Energieversorgungsnetz des elektrifizierten Streckenabschnitts zurückgespeist wird, weil zuvor zu viel Ladeenergie aus dem Energieversorgungsnetz zum Aufladen des Energiespeichers entnommen wurde und der Energiespeicher bereits voll ist. Mit anderen Worten lässt sich im optimalen Falle erreichen, dass die gesamte Bremsenergie zum Laden verwendet wird und nur noch die fehlende Differenzenergie aus dem Energieversorgungsnetz entnommen werden muss. Die Erfindung macht sich die Erkenntnis zunutze, dass auf der Basis der Kenntnis beispielsweise der Streckentopographie und des Fahrplans die zu erwartenden Bremsenergiemengen der geplanten Bremsungen bis zum nächsten nicht elektrifizierten Streckenabschnitt berechnet werden können. Wenn nun genau diese Energiemenge in dem Energiespeicher freigehalten wird, kann auch auf elektrifizierten Strecken bis zu 100% der Bremsenergie zur Ladung des Energiespeichers genutzt werden und das Fahrzeug kann trotzdem zuverlässig mit einem voll oder zumindest ausreichend geladenen Energiespeicher in den nächsten nichtelektrifizierten Streckenabschnitt einfahren.

Ein weiterer Vorteil der erfindungsgemäßen Ladesteuerungseinrichtung besteht darin, dass auch Betriebskosten reduziert werden können; denn die in das Energieversorgungsnetz zurückgespeiste Energie wird in der Regel wesentlich geringer vergütet als die aus dem Energieversorgungsnetz aufgenommene Energie kostet. Zudem geht Energie beim Aufnehmen aus und Rückspeisen in das Energieversorgungsnetz verloren, unter anderem durch Trafoverluste, so dass ein Reduzieren von Rückspeisevorgängen insgesamt Energie einsparen hilft.

Vorteilhaft ist es, wenn das Fahrzeug eine Prognoseeinrichtung aufweist, die derart ausgestaltet ist, dass sie - vor Einfahrt, bei Einfahrt oder nach Einfahrt in den elektrifizierten Streckenabschnitt oder zumindest vor Erreichen des nachfolgenden nichtelektrifizierten Streckenabschnitts - auf der Basis von Streckendaten des elektrifizierten Streckenabschnitts und Fahrstrategiedaten den Bremsenergiewert selbst ermittelt und diesen der Ladesteuerungseinrichtung übermittelt.

Erfindungsgemäß ist der zumindest eine Bremsenergiewert auf der Basis von Streckendaten des elektrifizierten Streckenabschnitts und Fahrstrategiedaten vor Fahrtbeginn vorab extern berechnet und im Fahrzeug abgespeichert worden und wird der vorab berechnete Bremsenergiewert von der Ladesteuerungseinrichtung beim Laden berücksichtigt.

Erfindungsgemäß sind für den elektrifizierten Streckenabschnitt zwei oder mehr fahrstrategiebezogene Bremsenergiewerte abgespeichert und führt die Ladesteuerungseinrichtung das Laden fahrstrategieabhängig unter Berücksichtigung der jeweiligen Fahrstrategie und dem dazu korrespondierenden fahrstrategiebezogenen Bremsenergiewert durch. Zu diesem Zwecke ist das Fahrzeug vorzugsweise mit einer Fahrstrategieermittlungseinrichtung ausgestattet.

Der oder die Bremsenergiewerte sind vorzugsweise in Form einer mathematischen Funktion oder einer Tabelle abgespeichert.

Der Sollenergiewert beschreibt bei einer bevorzugten Ausgestaltung den vollgeladenen Ladezustand des Energiespeichers.

Bei einer anderen bevorzugten Ausgestaltung ist vorgesehen, dass der Sollenergiewert derart festlegt ist, dass der Energiespeicher die Fahrenergie erhält, die zum Durchfahren des nächsten nichtelektrifizierten Streckenabschnitts nötig ist, vorzugsweise zuzüglich einer Sicherheitsmarge.

Die Ladesteuerungseinrichtung stellt den Ladestrom vorzugsweise unter Berücksichtigung eines ladestromabhängigen Ladewirkungsgrads, der das Verhältnis zwischen elektrischer Gesamtladeleistung und dadurch erzielter Speicherleistung im Energiespeicher angibt, ein. Vorteilhaft ist es, wenn die Ladesteuerungseinrichtung den Ladestrom derart wählt, dass der Ladewirkungsgrad optimal ist.

Vorteilhaft ist es, wenn die Prognoseeinrichtung
- vor oder nach Einfahrt in den elektrifizierten Streckenabschnitt einen ersten Bremsenergiewert ermittelt und
- während der Fahrt auf dem elektrifizierten Streckenabschnitt, also vor Erreichen des nachfolgenden nichtelektrifizierten Streckenabschnitts, ortabhängig anhand der Streckendaten des noch zu befahrenden Teilabschnitts sowie unter Berücksichtigung von aktualisierten Fahrstrategiedaten zumindest einmal eine Neuberechnung durchführt und zumindest einen weiteren Bremsenergiewert ermittelt.

Die Ladesteuerungseinrichtung aktualisiert vorzugsweise nach Erhalt des oder der weiteren Bremsenergiewerte jeweils die Ladestrategie, und zwar derart, dass der Energiespeicher bei Erreichen des nachfolgenden nichtelektrifizierten Streckenabschnitts den vorgegebenen Sollenergiewert unter Berücksichtigung der Rückspeicherung regenerierbarer Bremsenergie gemäß dem jeweils aktuellen Bremsenergiewert aufweist.

Bei der letztgenannten Ausführungsvariante können in vorteilhafter Weise Fahrstrategiewechsel während der Fahrt berücksichtigt werden; auch können in vorteilhafter Weise Ungenauigkeiten in der Berechnung während der Fahrt noch korrigiert werden. Eine Neuberechnung kann während der Fahrt regelmäßig oder unregelmäßig durchgeführt werden; auch kann eine Neuberechnung nach einem Fahrstrategiewechsel ausgelöst werden.

In Batteriefahrzeugen ist ein Fahrerassistenzsystem sinnvoll und damit auch oft vorhanden. Ein fortgeschrittenes Fahrerassistenzsystem kennt die Streckentopographie, den Fahrplan und die elektrifizierten Streckenabschnitte. Damit kann das Fahrerassistenzsystem die vorausliegenden geplanten Bremsungen unter Oberleitung und deren Energiemenge in kurzen Zyklen oder zu bestimmten Zeitpunkten (z.B. nach jeder Bremsung unter Oberleitung) berechnen und an die Ladesteuerungseinrichtung weitergeben. Demgemäß wird es als vorteilhaft angesehen, wenn das Fahrzeug ein solches Fahrerassistenzsystem aufweist.

Die Prognoseeinrichtung und die Ladesteuerungseinrichtung sind vorzugsweise Komponenten des Fahrerassistenzsystems oder sind in dieses integriert.

Vorzugsweise ist eine Anzeigeeinrichtung vorhanden, die die vom Fahrer gemäß Fahrstrategiedaten zu befolgende Fahrstrategie anzeigt.

Die Ladesteuerungseinrichtung lädt den Energiespeicher vorzugsweise nur soweit auf, dass die berechnete Bremsenergiemenge noch von dem Energiespeicher aufgenommen werden kann. Sollte nach der letzten Bremsung unter Oberleitung bzw. im elektrifizierten Streckenabschnitt - z. B. wegen Berechnungsungenauigkeiten - der Energiespeicher noch nicht ganz aufgeladen sein, kann der letzte Rest noch vor Einfahrt in den nichtelektrifizierten Bereich durch Energieentnahme aus dem externen Energieversorgungsnetz nachgeladen werden.

Die Erfindung bezieht sich darüber hinaus auf ein Verfahren zum Laden eines internen Energiespeichers eines Fahrzeugs, das mit einem internen Energiespeicher und einem Stromabnehmer, der zur Aufnahme externer elektrischer Energie während des Befahrens eines elektrifizierten Streckenabschnitts geeignet ist, ausgestattet ist, wobei der interne Energiespeicher gespeicherte Energie zum Befahren eines nachfolgenden nichtelektrifizierten Streckenabschnitts zur Verfügung stellen kann.

Erfindungsgemäß ist bezüglich eines solchen Verfahrens vorgesehen, dass während der Fahrt auf dem elektrifizierten Streckenabschnitt unter Heranziehung des aktuellen Ladestatus des Energiespeichers und zumindest eines Bremsenergiewerts, der die bis zum Ende des elektrifizierten Streckenabschnitts durch Bremsen noch regenerierbare und in den Energiespeicher einspeisbare Bremsenergie angibt, der interne Energiespeicher derart geladen wird, dass dieser bei Erreichen des nachfolgenden nichtelektrifizierten Streckenabschnitts unter Annahme einer Rückspeicherung der vom Bremsenergiewert angegebenen regenerierbaren Bremsenergie einen vorgegebenen Sollenergiewert aufweist. Erfindungsgemäß ist ferner vorgesehen, dass der zumindest eine Bremsenergiewert auf der Basis von Streckendaten des elektrifizierten Streckenabschnitts und Fahrstrategiedaten vor Fahrtbeginn vorab extern berechnet und im Fahrzeug abgespeichert worden ist, dass der vorab berechnete Bremsenergiewert von der Ladesteuerungseinrichtung beim Laden berücksichtigt wird, dass für den elektrifizierten Streckenabschnitt zwei oder mehr fahrstrategiebezogene Bremsenergiewerte abgespeichert sind, und dass die Ladesteuerungseinrichtung das Laden fahrstrategieabhängig unter Berücksichtigung der jeweiligen Fahrstrategie und dem dazu korrespondierenden fahrstrategiebezogenen Bremsenergiewert durchführt.

Bezüglich der Vorteile des erfindungsgemäßen Verfahrens sei auf die obigen Erläuterungen im Zusammenhang mit dem erfindungsgemäßen Fahrzeug verwiesen.

Vorteilhaft ist es, wenn der Bremsenergiewert vor oder nach Einfahrt in den elektrifizierten Streckenabschnitt, zumindest aber vor Erreichen des nachfolgenden nichtelektrifizierten Streckenabschnitts, auf der Basis von Streckendaten des elektrifizierten Streckenabschnitts und Fahrstrategiedaten im Fahrzeug ermittelt wird.

Auch kann in vorteilhafter Weise vorgesehen sein, dass der Bremsenergiewert vor oder nach Einfahrt in den elektrifizierten Streckenabschnitt, zumindest aber vor Erreichen des nachfolgenden nichtelektrifizierten Streckenabschnitts, auf der Basis von Streckendaten des elektrifizierten Streckenabschnitts und Fahrstrategiedaten außerhalb des Fahrzeugs ermittelt wird.

Vorteilhaft ist auch, wenn eine Prognoseeinrichtung vor oder nach Einfahrt in den elektrifizierten Streckenabschnitt einen ersten Bremsenergiewert ermittelt und während der Fahrt auf dem elektrifizierten Streckenabschnitt, also vor Erreichen des nachfolgenden nichtelektrifizierten Streckenabschnitts, ortabhängig anhand der Streckendaten des noch zu befahrenden Teilabschnitts sowie unter Berücksichtigung von Fahrstrategiedaten zumindest einmal eine Neuberechnung durchführt und zumindest einen weiteren bzw. aktualisierten Bremsenergiewert ermittelt.

Eine Ladesteuerungseinrichtung aktualisiert vorzugsweise nach Erhalt des oder der aktualisierten Bremsenergiewerte jeweils die Ladestrategie, und zwar derart, dass der Energiespeicher bei Erreichen des nachfolgenden nichtelektrifizierten Streckenabschnitts den vorgegebenen Sollenergiewert unter Berücksichtigung der Rückspeicherung regenerierbarer Bremsenergie gemäß dem jeweils aktualisierten Bremsenergiewert aufweist.

Eine Neuberechnung bzw. Aktualisierung der Bremsenergiewerte während der Fahrt kann regelmäßig oder unregelmäßig durchgeführt werden; auch kann eine Neuberechnung nach einem Fahrstrategiewechsel ausgelöst werden.

Die Erfindung wird nachfolgend anhand von Ausführungsbeispielen näher erläutert; dabei zeigen beispielhaft
- Figur 1: ein Ausführungsbeispiel für ein erfindungsgemäßes Fahrzeug, das mit einer Bremsenergiewerte berücksichtigenden Ladesteuerungseinrichtung ausgestattet ist,
- Figur 2: ein Ausführungsbeispiel für ein erfindungsgemäßes Fahrzeug, bei dem zusätzlich eine Fahrstrategieermittlungseinrichtung vorhanden ist,
- Figur 3: ein Ausführungsbeispiel für ein erfindungsgemäßes Fahrzeug, bei dem zusätzlich eine Prognoseeinrichtung vorhanden ist,
- Figur 4: eine bevorzugte Ausgestaltung des Ausführungsbeispiels gemäß Figur 1, bei der die Ladesteuerungseinrichtung in einer Rechenanlage implementiert ist,
- Figur 5: eine bevorzugte Ausgestaltung des Ausführungsbeispiels gemäß Figur 2, bei der die Ladesteuerungseinrichtung und die Fahrstrategieermittlungseinrichtung in einer Rechenanlage implementiert sind,
- Figur 6: eine bevorzugte Ausgestaltung des Ausführungsbeispiels gemäß Figur 3, bei der die Ladesteuerungseinrichtung, die Fahrstrategieermittlungseinrichtung und die Prognoseeinrichtung in einer Rechenanlage implementiert sind, und
- Figur 7: eine Strecke mit einem elektrifizierten Streckenabschnitt und einem nicht elektrifizierten Streckenabschnitt, die von einem Fahrzeug gemäß den Figuren 1 bis 6 befahren werden.

In den Figuren werden der Übersicht halber für identische oder vergleichbare Komponenten stets dieselben Bezugszeichen verwendet.

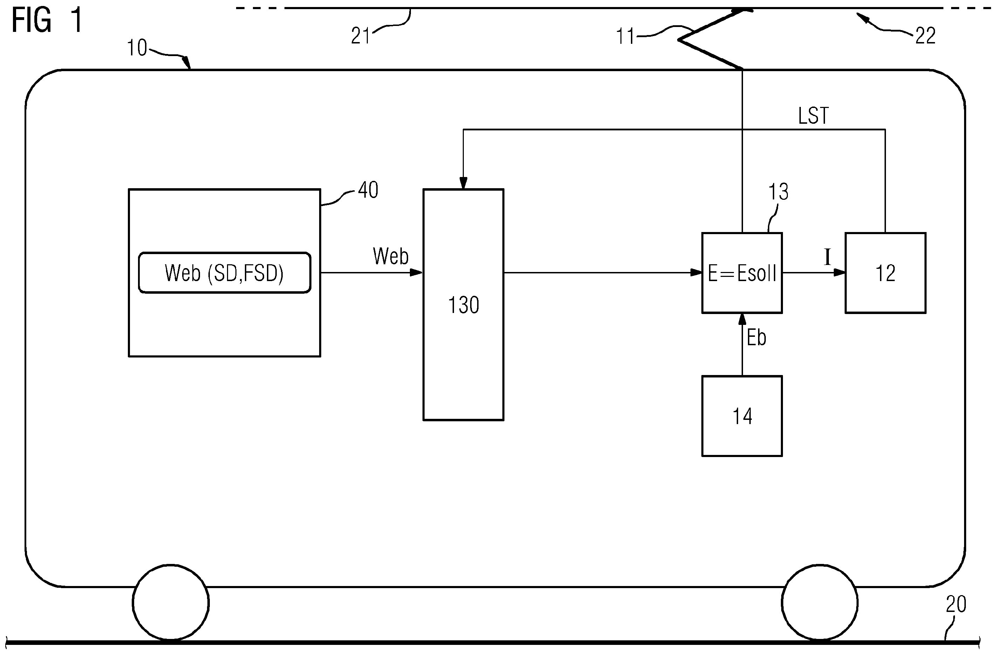

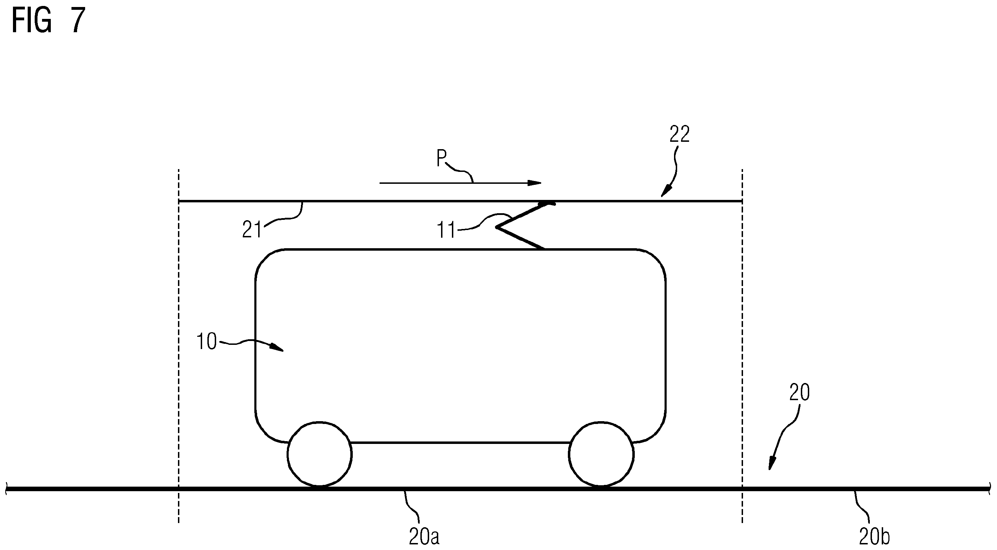

Die Figur 7 zeigt ein elektrisch betriebenes oder zumindest auch elektrisch antreibbares Fahrzeug 10, das über einen oder mehrere Stromabnehmer 11 mit einer Stromschiene oder einem Fahrdraht 21 eines externen Energieversorgungssystems 22 einer in der Figur 1 nur angedeuteten Strecke 20 in Verbindung steht. Bei dem Fahrzeug 10 handelt es sich vorzugsweise um ein Schienenfahrzeug.

Die Figur 7 zeigt das Fahrzeug 10 während des Befahrens eines elektrifizierten Streckenabschnitts 20a und vor dem Einfahren in einen nachfolgenden nichtelektrifizierten Streckenabschnitt 20b, wie durch einen Pfeil mit dem Bezugszeichen P angedeutet ist.

Die Figur 1 zeigt ein Ausführungsbeispiel für das Fahrzeug 10 gemäß Figur 7 näher im Detail. Das Fahrzeug 10 umfasst einen internen Energiespeicher 12, der die zum Befahren des nichtelektrifizierten Streckenabschnitts 20b benötigte Fahrenergie zur Verfügung stellt. Der Energiespeicher 12 wird während des Befahrens des elektrifizierten Streckenabschnitts 20a über ein Ladegerät 13 mittels eines Ladestroms I aufgeladen. Die elektrische Energie zum Laden kann über den Stromabnehmer 11 aus dem externen Energieversorgungssystem 22 entnommen werden oder zusätzlich von einem Antrieb 14 stammen, wenn beim Bremsen des Fahrzeugs 10 Bremsenergie Eb zur Verfügung steht. Der Antrieb 14 kann eine oder auch mehrere Antriebseinheiten aufweisen.

Die Ansteuerung des Ladegeräts 13 erfolgt durch eine Ladesteuerungseinrichtung 130, die während der Fahrt auf dem elektrifizierten Streckenabschnitt 20a unter Heranziehung des aktuellen Ladestatus LST des Energiespeichers 12 und zumindest eines Bremsenergiewerts Web, der die während des Befahrens des elektrifizierten Streckenabschnitts 20b durch Bremsen regenerierbare und in den Energiespeicher 12 einspeisbare Bremsenergie Eb angibt.

Die Ladesteuerungseinrichtung 130 ist derart ausgestaltet, dass sie den internen Energiespeicher 12 derart lädt, dass dessen gespeicherte Energie E bei Erreichen des nachfolgenden nichtelektrifizierten Streckenabschnitts 20b einen vorgegebenen Sollenergiewert Esoll aufweist, und zwar unter der Annahme einer vollständigen Rückspeicherung der gesamten vom Bremsenergiewert Web angegebenen regenerierbaren Bremsenergie Eb. Mit anderen Worten besteht das Ziel der Ladesteuerungseinrichtung 130 darin, die gesamte, voraussichtlich zur Verfügung stehende regenerierbare Bremsenergie Eb zu nutzen und nur soviel Energie aus dem externen Energieversorgungssystem 22 zu entnehmen, wie nötig ist. Durch diese Vorgehensweise wird außerdem erreicht, dass ein Zurückspeisen regenerierbarer Bremsenergie in das externe Energieversorgungssystem 22 vermieden oder zumindest auf ein Mindestmaß reduziert wird.

Bei dem Ausführungsbeispiel gemäß Figur 1 ist der Bremsenergiewert Web auf der Basis von Streckendaten SD des elektrifizierten Streckenabschnitts 20a und Fahrstrategiedaten FSD, die die jeweilige Fahrstrategie beim Befahren des elektrifizierten Streckenabschnitts 20a beschreiben, vor Fahrtbeginn vorab extern berechnet und in einem Speicher 40 des Fahrzeugs 10 abgespeichert worden. Es wird also von der Ladesteuerungseinrichtung 130 beim Laden für den elektrifizierten Streckenabschnitt 20a ein vorab berechneter Bremsenergiewert Web berücksichtigt, der die beim Befahren des elektrifizierten Streckenabschnitts 20a frei werdende Bremsenergie angibt und es ermöglicht, die gesamte Bremsenergie im Energiespeicher 12 zu speichern und eine Rückspeisung in das externe Energieversorgungssystem 22 zu minimieren.

Sollen mehrere unterschiedliche elektrifizierte Streckenabschnitte befahren werden können, so wird vorzugsweise für jeden dieser elektrifizierten Streckenabschnitte jeweils ein passender Bremsenergiewert Web ermittelt und in dem Speicher 40 gespeichert.

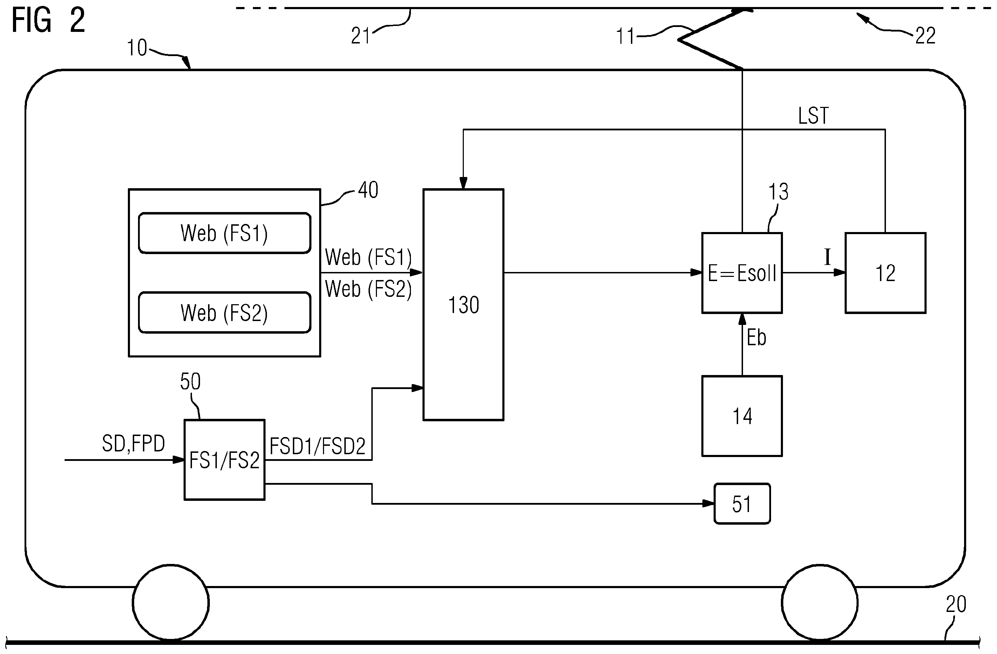

Die Figur 2 zeigt als zweites Ausführungsbeispiel für das Fahrzeug 10 gemäß Figur 7 eine Ausführungsvariante des ersten Ausführungsbeispiels gemäß Figur 1. Bei dem zweiten Ausführungsbeispiel gemäß Figur 2 sind in dem Speicher 40 des Fahrzeugs 10 für den elektrifizierten Streckenabschnitt 20a zwei oder mehr fahrstrategiebezogene Bremsenergiewerte abgespeichert, von denen in der Figur 2 aus Gründen der Übersicht nur zwei gezeigt und mit den Bezugszeichen Web(FS1) und Web(FS2) bezeichnet sind. Die fahrstrategiebezogenen Bremsenergiewerte Web(FS1) und Web(FS2) beziehen sich auf zwei unterschiedliche Fahrstrategien FS1 und FS2.

Bei dem zweiten Ausführungsbeispiel gemäß Figur 2 ist zusätzlich eine fahrzeugeigene Fahrstrategieermittlungseinrichtung 50 vorhanden, die auf der Basis von Streckendaten SD des elektrifizierten Streckenabschnitts 20a und Fahrplandaten FPD die jeweilige Fahrstrategie FS1 oder FS2 festgelegt.

Unter Berücksichtigung der von der Fahrstrategieermittlungseinrichtung 50 festgelegten Fahrstrategie FS1 bzw. FS2 liest die Ladesteuerungseinrichtung 130 den dazu jeweils korrespondierenden fahrstrategiebezogenen Bremsenergiewert Web(FS1) bzw. WEB(FS2) aus dem Speicher 40 aus. Anschließend führt die Ladesteuerungseinrichtung 130 das Laden des Energiespeichers 12 auf der Basis des jeweils ausgelesenen fahrstrategiebezogenen Bremsenergiewerts, also fahrstrategieabhängig, durch.

Die Ausführungsvariante gemäß Figur 2 ermöglicht somit in vorteilhafter Weise eine vollständige Speicherung von Bremsenergie für zwei oder mehr unterschiedliche Fahrstrategien, die von der Fahrstrategieermittlungseinrichtung situationsabhängig vorgegeben werden können, und zwar auf der Basis von vorab ermittelten und abgespeicherten Bremsenergiewerten.

Die ermittelte Fahrstrategie FS1 oder FS2 der fahrzeugeigenen Fahrstrategieermittlungseinrichtung 50 wird vorzugsweise durch eine Anzeigeeinrichtung 51 dem Fahrer des Fahrzeugs angezeigt, beispielsweise durch Geschwindigkeitsvorgaben, damit der Fahrer das Fahrzeug 10 fahrstrategiekonform steuern kann.

Die Bremsenergiewerte Web(FS1) und Web(FS2) können in Form einer mathematischen Funktion oder einer Tabelle in Abhängigkeit von den Fahrstrategien FS1 und FS2 bzw. deren Fahrstrategiedaten FSD1 und FSD2 abgespeichert sein.

Bei den Ausführungsbeispielen gemäß den Figuren 1 und 2 wird beispielhaft davon ausgegangen, dass die Bremsenergiewerte Web in dem Speicher 40 des Fahrzeug 10 fest hinterlegt sind; alternativ kann vorgesehen sein, dass die Bremsenergiewerte Web(FS), Web(FS1) und Web(FS2) während der Fahrt von einer externen streckenseitigen Leiteinrichtung zu dem Fahrzeug 10 übertragen werden, beispielsweise drahtlos oder über Funk. Die Übertragung sollte spätestens vor oder kurz nach dem Einfahren in den elektrifizierten Streckenabschnitt 20a erfolgen, um eine rechtzeitige Berücksichtigung beim Laden während der Fahrt in dem elektrifizierten Streckenabschnitt 20a zu ermöglichen.

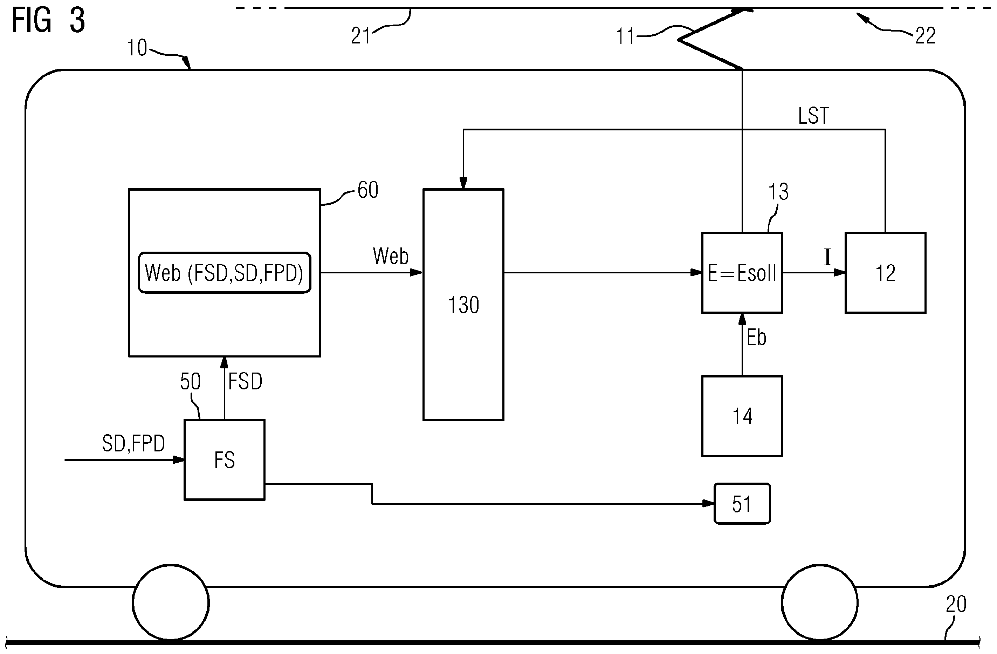

Die Figur 3 zeigt ein drittes Ausführungsbeispiel für das Fahrzeug 10 gemäß Figur 7. Bei dem Ausführungsbeispiel gemäß Figur 3 ist das Fahrzeug 10 mit einer eigenen Prognoseeinrichtung 60 ausgestattet, die derart ausgestaltet ist, dass sie - vor Einfahrt, bei Einfahrt oder nach Einfahrt in den elektrifizierten Streckenabschnitt 20a oder zumindest vor Erreichen des nachfolgenden nichtelektrifizierten Streckenabschnitts 20b - auf der Basis von Streckendaten SD des elektrifizierten Streckenabschnitts 20a, Fahrplandaten FPD und Fahrstrategiedaten FSD, die eine vorgegebene Fahrstrategie FS beschreiben, den Bremsenergiewert Web selbst ermittelt und diesen der Ladesteuerungseinrichtung 130 übermittelt.

Bei dem dritten Ausführungsbeispiel gemäß Figur 3 ist - in Übereinstimmung mit dem zweiten Ausführungsbeispiel gemäß Figur 2 - zum Erzeugen der Fahrstrategiedaten FSD eine fahrzeugeigene Fahrstrategieermittlungseinrichtung 50 vorhanden, die auf der Basis von Streckendaten SD des elektrifizierten Streckenabschnitts 20a und Fahrplandaten FPD die jeweilige Fahrstrategie FS festgelegt und die Fahrstrategiedaten FSD zu der Prognoseeinrichtung 60 übermittelt.

Die Ladesteuerungseinrichtung 130 führt das Laden des Energiespeichers 12 bei dem Ausführungsbeispiel gemäß Figur 3 also fahrstrategieabhängig unter Berücksichtigung einer selbst bzw. fahrzeugintern ermittelten Fahrstrategie FS und einem fahrzeugintern ermittelten Bremsenergiewert Web durch.

Die Prognoseeinrichtung 60, die Fahrstrategieermittlungseinrichtung 50, die Anzeigeeinrichtung 51 und die Ladesteuerungseinrichtung 130 können Bestandteile eines übergeordneten Fahrerassistenzsystems sein.

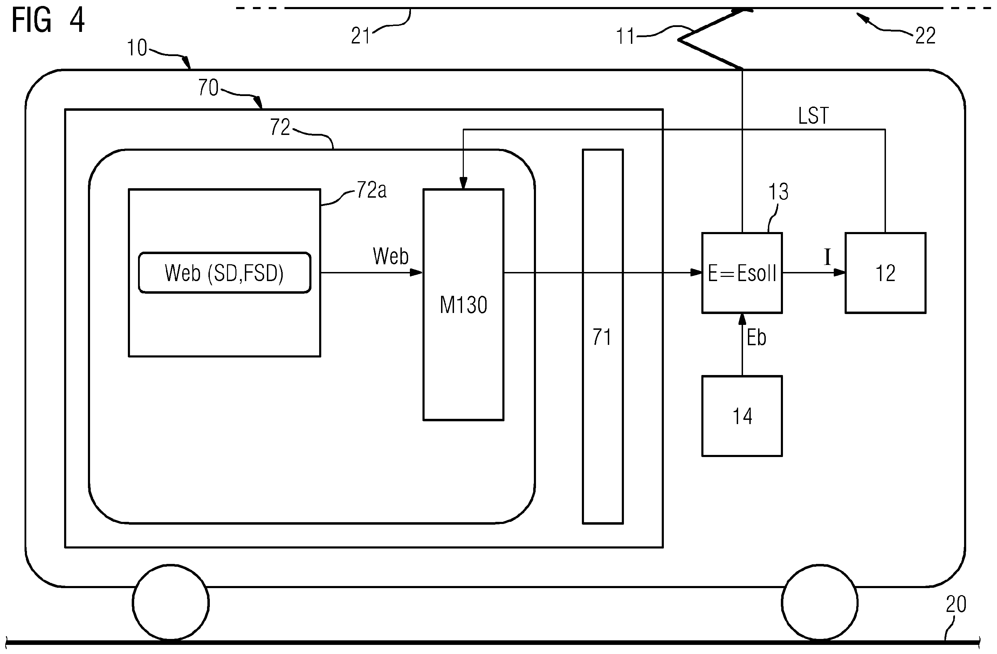

Die Figur 4 zeigt als viertes Ausführungsbeispiel eine konkrete Ausgestaltung des ersten Ausführungsbeispiels gemäß Figur 1. Das Fahrzeug 10 umfasst eine Rechenanlage 70, die eine Recheneinrichtung 71 und einen Rechenanlagenspeicher 72 aufweist. In dem Rechenanlagenspeicher 72 ist eine Vielzahl an Programmmodulen abgespeichert, die bei Ausführung durch die Recheneinrichtung 71 die Arbeitsweise der Rechenanlage 70 bestimmen.

In dem Rechenanlagenspeicher 72 ist unter anderem ein Ladestrategiemodul M130 abgespeichert, das bei Ausführung durch die Recheneinrichtung 71 die Ladesteuerungseinrichtung 130 bildet. Der Speicher 40 gemäß Figur 1 wird durch einen Speicherabschnitt 72a des Rechenanlagenspeichers 72 gebildet.

Im Übrigen gelten die obigen Ausführungen im Zusammenhang mit der Figur 1 für das Ausführungsbeispiel gemäß Figur 4 entsprechend.

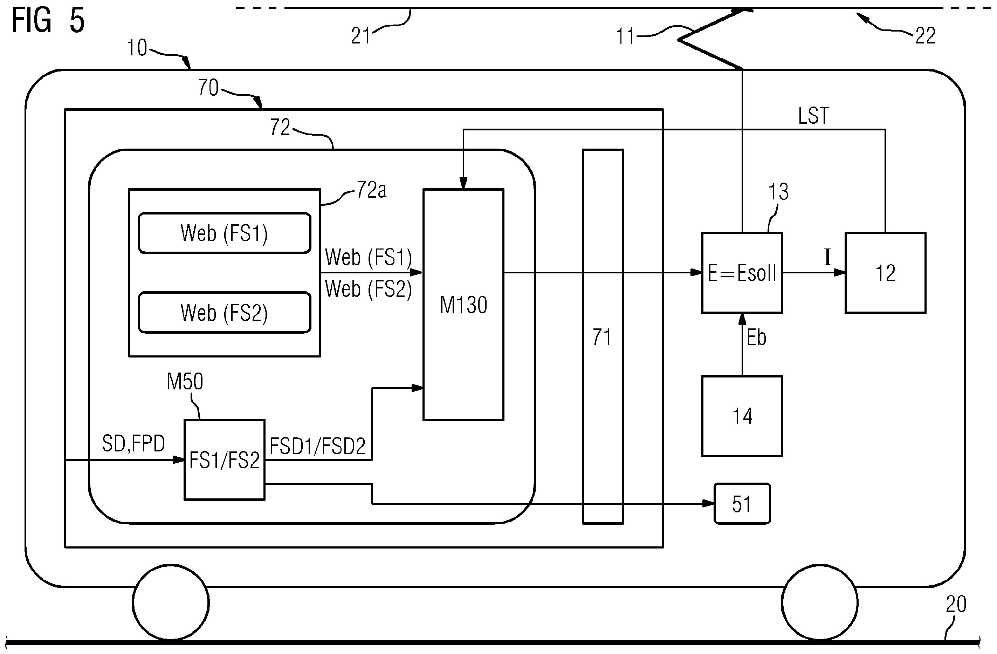

Die Figur 5 zeigt als fünftes Ausführungsbeispiel eine konkrete Ausgestaltung des zweiten Ausführungsbeispiels gemäß Figur 2.

In Übereinstimmung mit dem vierten Ausführungsbeispiel gemäß Figur 4 ist eine Rechenanlage 70 vorhanden, die eine Recheneinrichtung 71 und einen Rechenanlagenspeicher 72 aufweist.

Die Fahrstrategieermittlungseinrichtung 50 des Fahrzeugs 10 gemäß Figur 2 wird durch ein Fahrerassistenzmodul M50 gebildet, das bei Ausführung durch die Recheneinrichtung 71 die jeweilige Fahrstrategie FS1 oder FS2 in Form der Fahrstrategiedaten FSD1 oder FSD2, die die jeweilige Fahrstrategie FS1 oder FS2 beschreiben, ermittelt und dem Ladestrategiemodul M130 übermittelt.

Das Ladestrategiemodul M130 führt bei Ausführung durch die Recheneinrichtung 71 anschließend das Laden des Energiespeichers 12 fahrstrategieabhängig unter Berücksichtigung des dazu jeweils korrespondierenden fahrstrategiebezogenen Bremsenergiewerts Web(FS1) bzw. WEB(FS2) durch.

Im Übrigen gelten die obigen Ausführungen im Zusammenhang mit der Figur 2 für das fünfte Ausführungsbeispiel gemäß Figur 5 entsprechend.

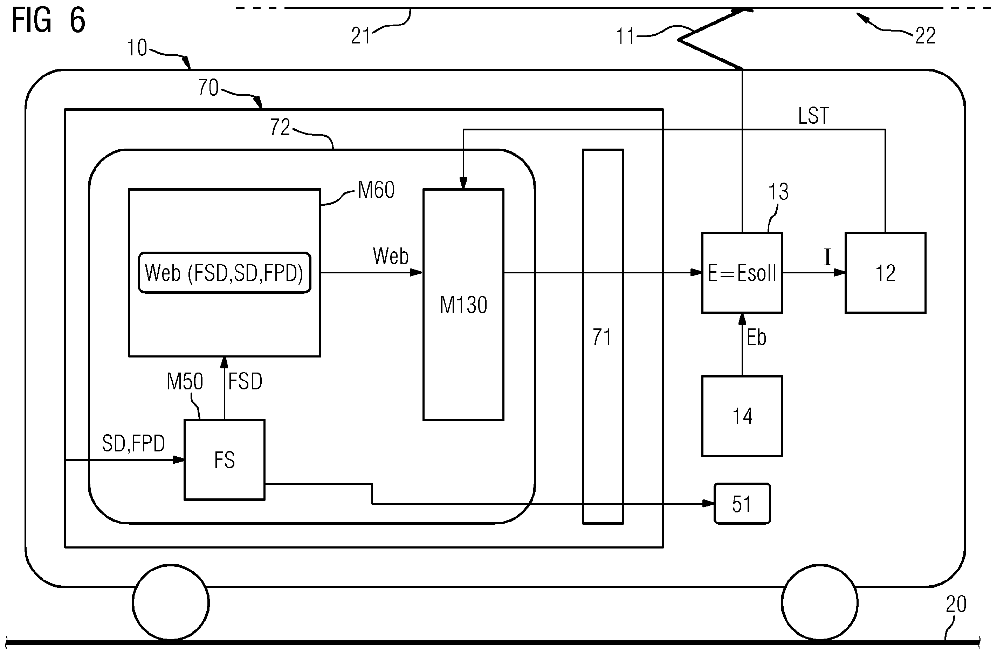

Die Figur 6 zeigt als sechstes Ausführungsbeispiel eine konkrete Ausgestaltung des dritten Ausführungsbeispiels gemäß Figur 3. In Übereinstimmung mit den Ausführungsbeispielen gemäß den Figuren 4 und 5 ist eine Rechenanlage 70 vorhanden, die eine Recheneinrichtung 71 und einen Rechenanlagenspeicher 72 aufweist.

Die Prognoseeinrichtung 60 gemäß Figur 3 wird durch ein Prognosemodul M60 gebildet, das bei Ausführung durch die Recheneinrichtung 71 auf der Basis der Streckendaten SD des elektrifizierten Streckenabschnitts 20a und Fahrstrategiedaten FSD einer vorgegebenen Fahrstrategie FS den Bremsenergiewert Web selbst ermittelt und diesen dem Ladesteuerungsmodul M130 übermittelt.

Im Übrigen gelten die obigen Ausführungen im Zusammenhang mit der Figur 3 für das sechste Ausführungsbeispiel gemäß Figur 6 entsprechend.

Bei den Ausführungsbeispielen gemäß den Figuren 1 bis 6 wird der Sollenergiewert Esoll vorzugsweise derart bemessen, dass er den voll geladenen Speicherzustand des internen Energiespeichers 12 beschreibt; alternativ kann der Sollenergiewert Esoll derart bemessen sein, dass die in dem Speicher 12 abgespeicherte Energie - unter Berücksichtigung einer Sicherheitsmarge - nur zum Durchfahren des jeweils nächsten nicht elektrifizierten Streckenabschnitts 20b ausreicht.

Bei den Ausführungsbeispielen gemäß den Figuren 1 bis 6 wird die Ladesteuerungseinrichtung 130 den Ladestrom I vorzugsweise unter Berücksichtigung eines ladestromabhängigen Ladewirkungsgrads, der das Verhältnis zwischen im Energiespeicher 12 gespeicherter elektrischer Energie und der zugeführten Energie angibt, einstellen. Vorzugsweise wird die Ladesteuerungseinrichtung den Ladestrom derart wählen, dass der Ladewirkungsgrad optimal ist.

Bei den Ausführungsbeispielen gemäß den Figuren 3 und 6 ist es vorteilhaft, wenn die Prognoseeinrichtung 60
- vor oder nach Einfahrt in den elektrifizierten Streckenabschnitt 20a einen ersten Bremsenergiewert Web ermittelt, und
- während der Fahrt auf dem elektrifizierten Streckenabschnitt 20a, also vor Erreichen des nachfolgenden nichtelektrifizierten Streckenabschnitts 20b, ortabhängig anhand der Streckendaten SD des noch zu befahrenden Teilabschnitts sowie unter Berücksichtigung von Fahrstrategiedaten FSD zumindest einmal eine Neuberechnung durchführt und zumindest einen weiteren bzw. aktualisierten Bremsenergiewert ermittelt.

Die Ladesteuerungseinrichtung 130 aktualisiert nach Erhalt des oder der aktualisierten Bremsenergiewerte vorzugsweise jeweils die Ladestrategie, und zwar derart, dass der Energiespeicher 12 bei Erreichen des nachfolgenden nichtelektrifizierten Streckenabschnitts 20b den vorgegebenen Sollenergiewert Esoll unter Berücksichtigung der Rückspeicherung regenerierbarer Bremsenergie Eb gemäß dem jeweils aktuellen Bremsenergiewert aufweist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie in den folgenden Ansprüchen definiert.

## Patentansprüche

1. Fahrzeug (10), insbesondere Schienenfahrzeug, mit mindestens einem Stromabnehmer (11) zur Aufnahme externer elektrischer Energie während des Befahrens eines elektrifizierten Streckenabschnitts (20a) und mindestens einem internen Energiespeicher (12), der gespeicherte Energie zum Befahren eines nachfolgenden nichtelektrifizierten Streckenabschnitts (20b) zur Verfügung stellen kann,
wobei das Fahrzeug (10) eine Ladesteuerungseinrichtung (130) aufweist, die während der Fahrt auf dem elektrifizierten Streckenabschnitt (20a) unter Heranziehung des aktuellen Ladestatus (LST) des Energiespeichers (12) und zumindest eines Bremsenergiewerts (Web), der die bis zum Ende des elektrifizierten Streckenabschnitts (20a) durch Bremsen noch regenerierbare und in den Energiespeicher (12) einspeisbare Bremsenergie (Eb) angibt, den mindestens einen internen Energiespeicher (12) derart lädt, dass dieser bei Erreichen des nachfolgenden nichtelektrifizierten Streckenabschnitts (20b) unter Annahme einer Rückspeicherung der vom Bremsenergiewert (Web) angegebenen regenerierbaren Bremsenergie (Eb) einen vorgegebenen Sollenergiewert (Esoll) aufweist,
**dadurch gekennzeichnet, dass**
- der zumindest eine Bremsenergiewert (Web) auf der Basis von Streckendaten (SD) des elektrifizierten Streckenabschnitts (20a) und Fahrstrategiedaten (FSD) vor Fahrtbeginn vorab extern berechnet und im Fahrzeug (10) abgespeichert worden ist,
- der vorab berechnete Bremsenergiewert (Web) von der Ladesteuerungseinrichtung (130) beim Laden berücksichtigt wird,
- für den elektrifizierten Streckenabschnitt (20a) zwei oder mehr fahrstrategiebezogene Bremsenergiewerte (Web) abgespeichert sind, und
- die Ladesteuerungseinrichtung (130) das Laden fahrstrategieabhängig unter Berücksichtigung der jeweiligen Fahrstrategie (FS, FS1, FS2) und dem dazu korrespondierenden fahrstrategiebezogenen Bremsenergiewert (Web) durchführt.

2. Fahrzeug (10) nach Anspruch 1,
**dadurch gekennzeichnet, dass**
das Fahrzeug (10) eine Prognoseeinrichtung (60) aufweist, die derart ausgestaltet ist, dass sie - vor Einfahrt, bei Einfahrt oder nach Einfahrt in den elektrifizierten Streckenabschnitt (20a) oder zumindest vor Erreichen des nachfolgenden nichtelektrifizierten Streckenabschnitts (20b) - auf der Basis von Streckendaten (SD) des elektrifizierten Streckenabschnitts (20a) und Fahrstrategiedaten (FSD) den Bremsenergiewert (Web) selbst ermittelt und diesen der Ladesteuerungseinrichtung (130) übermittelt.

3. Fahrzeug (10) nach Anspruch 1,
**dadurch gekennzeichnet, dass**
der oder die Bremsenergiewerte (Web) in Form einer mathematischen Funktion oder einer Tabelle abgespeichert sind.

4. Fahrzeug (10) nach einem der voranstehenden Ansprüche,
**dadurch gekennzeichnet, dass**
der Sollenergiewert (Esoll) den vollgeladenen Ladezustand des Energiespeichers (12) beschreibt.

5. Fahrzeug (10) nach einem der voranstehenden Ansprüche 1 bis 3,
**dadurch gekennzeichnet, dass**
der Sollenergiewert (Esoll) derart festgelegt ist, dass der Energiespeicher (12) die Fahrenergie erhält, die zum Durchfahren des nächsten nichtelektrifizierten Streckenabschnitts (20b) nötig ist, vorzugsweise zuzüglich einer Sicherheitsmarge.

6. Fahrzeug (10) nach einem der voranstehenden Ansprüche,
**dadurch gekennzeichnet, dass**
die Ladesteuerungseinrichtung (130) den Ladestrom (I) unter Berücksichtigung eines ladestromabhängigen Ladewirkungsgrads, der das Verhältnis zwischen elektrischer Gesamtladeleistung und dadurch erzielter Speicherleistung im Energiespeicher (12) angibt, einstellt.

7. Fahrzeug (10) nach Anspruch 6,
**dadurch gekennzeichnet, dass**
die Ladesteuerungseinrichtung (130) den Ladestrom (I) derart wählt, dass der Ladewirkungsgrad optimal ist.

8. Fahrzeug (10) nach einem der voranstehenden Ansprüche,
**dadurch gekennzeichnet, dass** die Prognoseeinrichtung (60)
- vor oder nach Einfahrt in den elektrifizierten Streckenabschnitt (20a) einen ersten Bremsenergiewert (Web) ermittelt und
- während der Fahrt auf dem elektrifizierten Streckenabschnitt (20a), also vor Erreichen des nachfolgenden nichtelektrifizierten Streckenabschnitts (20b), ortabhängig anhand der Streckendaten (SD) des noch zu befahrenden Teilabschnitts sowie unter Berücksichtigung von aktualisierten Fahrstrategiedaten (FSD) zumindest einmal eine Neuberechnung durchführt und zumindest einen aktualisierten Bremsenergiewert (Web) ermittelt und
die Ladesteuerungseinrichtung (130) nach Erhalt des oder der aktualisierten Bremsenergiewerte (Web) jeweils die Ladestrategie aktualisiert, und zwar derart, dass der Energiespeicher (12) bei Erreichen des nachfolgenden nichtelektrifizierten Streckenabschnitts (20b) den vorgegebenen Sollenergiewert (Esoll) unter Berücksichtigung der Rückspeicherung regenerierbarer Bremsenergie (Eb) gemäß dem jeweils aktualisierten Bremsenergiewert (Web) aufweist.

9. Fahrzeug (10) nach einem der voranstehenden Ansprüche,
**dadurch gekennzeichnet, dass**
die Prognoseeinrichtung (60) und die Ladesteuerungseinrichtung (130) Komponenten eines Fahrerassistenzsystems bilden.

10. Verfahren zum Laden eines internen Energiespeichers (12) eines Fahrzeugs (10), das mit einer Ladesteuerungseinrichtung (130), mit einem internen Energiespeicher (12) und einem Stromabnehmer (11), der zur Aufnahme externer elektrischer Energie während des Befahrens eines elektrifizierten Streckenabschnitts (20a) geeignet ist, ausgestattet ist, wobei der interne Energiespeicher (12) gespeicherte Energie zum Befahren eines nachfolgenden nichtelektrifizierten Streckenabschnitts (20b) zur Verfügung stellen kann, wobei während der Fahrt auf dem elektrifizierten Streckenabschnitt (20a) unter Heranziehung des aktuellen Ladestatus (LST) des Energiespeichers (12) und zumindest eines Bremsenergiewerts (Web), der die bis zum Ende des elektrifizierten Streckenabschnitts (20a) durch Bremsen noch regenerierbare und in den Energiespeicher (12) einspeisbare Bremsenergie (Eb) angibt, der interne Energiespeicher (12) derart mittels der Ladesteuerungseinrichtung (130) geladen wird, dass dieser bei Erreichen des nachfolgenden nichtelektrifizierten Streckenabschnitts (20b) unter Annahme einer Rückspeicherung der vom Bremsenergiewert (Web) angegebenen regenerierbaren Bremsenergie (Eb) einen vorgegebenen Sollenergiewert (Esoll) aufweist,
**dadurch gekennzeichnet, dass**
- der zumindest eine Bremsenergiewert (Web) auf der Basis von Streckendaten (SD) des elektrifizierten Streckenabschnitts (20a) und Fahrstrategiedaten (FSD) vor Fahrtbeginn vorab extern berechnet und im Fahrzeug (10) abgespeichert worden ist,
- der vorab berechnete Bremsenergiewert (Web) von der Ladesteuerungseinrichtung (130) beim Laden berücksichtigt wird,
- für den elektrifizierten Streckenabschnitt (20a) zwei oder mehr fahrstrategiebezogene Bremsenergiewerte (Web) abgespeichert sind, und
- die Ladesteuerungseinrichtung (130) das Laden fahrstrategieabhängig unter Berücksichtigung der jeweiligen Fahrstrategie (FS, FS1, FS2) und dem dazu korrespondierenden fahrstrategiebezogenen Bremsenergiewert (Web) durchführt.

11. Verfahren nach Anspruch 10,
**dadurch gekennzeichnet, dass**
der Bremsenergiewert (Web) vor oder nach Einfahrt in den elektrifizierten Streckenabschnitt (20a), zumindest aber vor Erreichen des nachfolgenden nichtelektrifizierten Streckenabschnitts (20b), auf der Basis von Streckendaten (SD) des elektrifizierten Streckenabschnitts (20a) und Fahrstrategiedaten (FSD) im Fahrzeug (10) ermittelt wird.

12. Verfahren nach Anspruch 10,
**dadurch gekennzeichnet, dass**
der Bremsenergiewert (Web) vor oder nach Einfahrt in den elektrifizierten Streckenabschnitt (20a), zumindest aber vor Erreichen des nachfolgenden nichtelektrifizierten Streckenabschnitts (20b), auf der Basis von Streckendaten (SD) des elektrifizierten Streckenabschnitts (20a) und Fahrstrategiedaten (FSD) außerhalb des Fahrzeugs (10) ermittelt wird.

13. Verfahren nach einem der voranstehenden Ansprüche 10 bis 12,
**dadurch gekennzeichnet, dass** eine Prognoseeinrichtung (60)
- vor oder nach Einfahrt in den elektrifizierten Streckenabschnitt (20a) einen ersten Bremsenergiewert (Web) ermittelt und
- während der Fahrt auf dem elektrifizierten Streckenabschnitt (20a), also vor Erreichen des nachfolgenden nichtelektrifizierten Streckenabschnitts (20b), ortabhängig anhand der Streckendaten (SD) des noch zu befahrenden Teilabschnitts sowie unter Berücksichtigung von Fahrstrategiedaten (FSD) zumindest einmal eine Neuberechnung durchführt und zumindest einen aktualisierten Bremsenergiewert (Web) ermittelt und
eine Ladesteuerungseinrichtung (130) nach Erhalt des oder der aktualisierten Bremsenergiewerte (Web) jeweils die Ladestrategie aktualisiert, und zwar derart, dass der Energiespeicher (12) bei Erreichen des nachfolgenden nichtelektrifizierten Streckenabschnitts (20b) den vorgegebenen Sollenergiewert (Esoll) unter Berücksichtigung der Rückspeicherung regenerierbarer Bremsenergie (Eb) gemäß dem jeweils aktualisierten Bremsenergiewert (Web) aufweist.

## Claims

1. Vehicle (10), in particular rail vehicle, with at least one current collector (11) for receiving external electrical energy while traversing an electrified track section (20a) and at least one internal energy store (12) which can provide stored energy for traversing a subsequent non-electrified track section (20b),
wherein the vehicle (10) has a charging control facility (130) which, during the journey on the electrified track section (20a), using the current charge status (LST) of the energy store (12) and at least one braking energy value (Web), which indicates the braking energy (Eb) which can still be regenerated by braking and fed into the energy store (12) up until the end of the electrified track section (20a), charges the at least one internal energy store (12) such that it has a predefined setpoint energy value (Esetpoint) when it reaches the subsequent non-electrified track section (20b) assuming a recovery of the regenerable braking energy (Eb) indicated by the braking energy value (Web),
**characterised in that**
- the at least one braking energy value (Web) has been externally calculated in advance based on track data (SD) of the electrified track section (20a) and travel strategy data (FSD) prior to the start of the journey and has been stored in the vehicle (10),
- the braking energy value (Web) calculated in advance is taken into consideration by the charging control facility (130) during charging,
- two or more travel strategy-related braking energy values (Web) are stored for the electrified track section (20a), and
- the charging control facility (130) performs the charging depending on the travel strategy taking into consideration the respective travel strategy (FS, FS1, FS2) and the travel strategy-related braking energy value (Web) corresponding thereto.

2. Vehicle (10) according to claim 1,
**characterised in that**
the vehicle (10) has a forecast facility (60) which is configured so as to determine the braking energy value (Web) itself and transfer this to the charging control facility (130) - prior to entry, during entry or following entry into the electrified track section (20a) or at least prior to reaching the subsequent non-electrified track section (20b) - based on track data (SD) of the electrified track section (20a) and on travel strategy data (FSD).

3. Vehicle (10) according to claim 1,
**characterised in that**
the braking energy value/values (Web) is/are stored in the form of a mathematical function or a table.

4. Vehicle (10) according to one of the preceding claims,
**characterised in that**
the setpoint energy value (Esetpoint) describes the fully charged charge status of the energy store (12).

5. Vehicle (10) according to one of the preceding claims 1 to 3,
**characterised in that**
the target energy value (Esetpoint) is specified such that the energy store (12) contains the travel energy necessary for travelling on the next non-electrified track section (20b), preferably in addition to a safety margin.

6. Vehicle (10) according to one of the preceding claims,
**characterised in that**
the charging control facility (130) sets the charging current (I) taking into consideration a charging current-dependent charging efficiency which indicates the relationship between the electrical total charging power and the storage power achieved thereby in the energy store (12).

7. Vehicle (10) according to claim 6,
**characterised in that**
the charging control facility (130) selects the charging current (I) such that the charging efficiency is optimal.

8. Vehicle (10) according to one of the preceding claims,
**characterised in that**
the forecast facility (60)
- determines a first braking energy value (Web) prior to or following entry into the electrified track section (20a) and
- performs at least once a recalculation and determines at least one updated braking energy value (Web) while travelling on the electrified track section (20a), that is, prior to reaching the subsequent non-electrified track section (20b), in a location-dependent manner based on the track data (SD) of the subsection yet to be traversed, and also taking into consideration updated travel strategy data (FSD) and
the charging control facility (130) updates the charging strategy in each case after obtaining the updated braking energy value(s) (Web) in such a way that, upon reaching the subsequent non-electrified track section (20b), the energy store (12) has the predefined setpoint energy value (Esetpoint) taking into consideration the recovery of regenerable braking energy (Eb) according to the respective updated braking energy value (Web).

9. Vehicle (10) according to one of the preceding claims,
**characterised in that**
the forecast facility (60) and the charging control facility (130) form components of a driver assistance system.

10. Method for charging an internal energy store (12) of a vehicle (10), which is equipped with a charging control facility (130), with an internal energy store (12) and a current collector (11), which is suitable for receiving external electrical energy while traversing an electrified track section (20a), wherein the internal energy store (12) can provide stored energy for traversing a subsequent non-electrified track section (20b),
wherein, during the journey on the electrified track section (20a), using the current charge status (LST) of the energy store (12) and at least one braking energy value (Web), which indicates the braking energy (Eb) which can still be regenerated by braking and fed into the energy store (12) up until the end of the electrified track section (20a), the internal energy store (12) is charged by means of the charging control facility (130) such that it has a predefined setpoint energy value (Esetpoint) when it reaches the subsequent non-electrified track section (20b) assuming a recovery of the regenerable braking energy (Eb) indicated by the braking energy value,
**characterised in that**
- the at least one braking energy value (Web) has been externally calculated in advance based on track data (SD) of the electrified track section (20a) and travel strategy data (FSD) prior to the start of the journey and has been stored in the vehicle (10),
- the braking energy value (Web) calculated in advance is taken into consideration by the charging control facility (130) during charging,
- two or more travel strategy-related braking energy values (Web) are stored for the electrified track section (20a), and
- the charging control facility (130) performs the charging depending on the travel strategy taking into consideration the respective travel strategy (FS, FS1, FS2) and the travel strategy-related braking energy value (Web) corresponding thereto.

11. Method according to claim 10,
**characterised in that**
the braking energy value (Web) is determined prior to or following entry into the electrified track section (20a), at the very least, prior to reaching the subsequent non-electrified track section (20b) based on track data (SD) of the electrified track section (20a) and travel strategy data (FSD) in the vehicle (10).

12. Method according to claim 10,
**characterised in that**
the braking energy value (Web) is determined prior to or following entry into the electrified track section (20a), at the very least, prior to reaching the subsequent non-electrified track section (20b) based on track data (SD) of the electrified track section (20a) and travel strategy data (FSD) external to the vehicle (10).

13. Method according to one of the preceding claims 10 to 12,
**characterised in that**
the forecast facility (60)
- determines a first braking energy value (Web) prior to or following entry into the electrified track section (20a) and
- performs at least once a recalculation and determines at least one updated braking energy value (Web) while travelling on the electrified track section (20a), that is, prior to reaching the subsequent non-electrified track section (20b), in a location-dependent manner based on the track data (SD) of the subsection yet to be traversed, and also taking into consideration travel strategy data (FSD) and
a charging control facility (130) updates the charging strategy in each case after obtaining the updated braking energy value/values (Web) in such a way that, upon reaching the subsequent non-electrified track section (20b), the energy store (12) has the predefined setpoint energy value (Esetpoint) taking into consideration the recovery of regenerable braking energy (Eb) according to the respective updated braking energy value (Web).

## Revendications

1. Véhicule (10), en particulier véhicule ferroviaire, comprenant au moins un appareil (11) de prise de courant pour la prise d'énergie électrique extérieure pendant le parcours sur un tronçon (20a) de voie électrifié et au moins un accumulateur (12) interne d'énergie, qui peut mettre à disposition l'énergie accumulée pour le parcours d'un tronçon (20b) de voie suivant non électrifié,
dans lequel le véhicule (10) a un dispositif (130) de commande de charge, qui, pendant la circulation sur un tronçon (20a) de voie électrifié, en tirant parti de l'état (LST) de charge en cours de l'accumulateur (12) d'énergie et d'au moins une valeur (Web) d'énergie de freinage, qui indique l'énergie (Eb) de freinage pouvant être encore régénérée par freinage jusqu'à la fin du tronçon (20a) de voie électrifié et pouvant être alimentée dans l'accumulateur (12) d'énergie, charge le au moins un accumulateur (12) interne d'énergie, de manière à ce que celui-ci ait, lorsque le tronçon (20b) de voie suivant non électrifié est atteint, en supposant une alimentation en retour d'une énergie (Eb) de freinage pouvant être régénérée indiquée par la valeur (Web) d'énergie de freinage, une valeur (Esoll) d'énergie de consigne donnée à l'avance,
**caractérisé en ce que**
- la au moins une valeur (Web) d'énergie de freinage a été calculée extérieurement à l'avance avant le début de la circulation sur la base de données (SD) de voie du tronçon (20a) de voie électrifié et de données (FSD) de stratégie de circulation et a été mise en mémoire dans le véhicule (10),
- la valeur (Web) d'énergie de freinage calculée à l'avance est prise en compte lors de la charge par le dispositif (130) de commande de charge,
- pour le tronçon (20a) de voie électrifié, deux ou plus de deux valeurs (Web) d'énergie de freinage rapportées à la stratégie de circulation sont mises en mémoire, et
- le dispositif (130) de commande de charge effectue la charge en fonction d'une stratégie de circulation en tenant compte de la stratégie (FS, FS1, FS2) respective de circulation et de la valeur (Web) d'énergie de freinage correspondante rapportée à la stratégie de circulation.

2. Véhicule (10) suivant la revendication 1,
**caractérisé en ce que**
le véhicule (10) a un dispositif (60) de pronostic, qui est conformé, de manière à ce que - avant l'entrée, à l'entrée ou après l'entrée dans le tronçon (20a) de voie électrifié ou du moins avant d'atteindre le tronçon (20b) de voie suivant non électrifié - il détermine soi-même, sur la base de données (SD) de voie du tronçon (20a) de voie électrifié et de données (FSD) de stratégie de circulation, l'énergie (Web) de freinage et la transmette au dispositif (130) de commande de charge.

3. Véhicule (10) suivant la revendication 1,
**caractérisé en ce que**
le ou les valeurs (Web) d'énergie de freinage sont mises en mémoire sous la forme d'une fonction mathématique ou d'une table.

4. Véhicule (10) suivant l'une des revendications précédentes, **caractérisé en ce que** la valeur (Esoll) d'énergie de consigne décrit l'état de charge chargé complètement de l'accumulateur (12) d'énergie.

5. Véhicule (10) suivant l'une des revendications 1 à 3,
**caractérisé en ce que**
la valeur (Esoll) d'énergie de consigne est fixée, de manière à ce que l'accumulateur (12) d'énergie reçoive l'énergie de circulation, qui est nécessaire pour parcourir le tronçon (20b) de voie suivant non électrifié, additionnée de préférence d'une marge de sécurité.

6. Véhicule (10) suivant l'une des revendications précédentes,
**caractérisé en ce que**
le dispositif (130) de commande de charge règle le courant (I) de charge en tenant compte d'un rendement de charge dépendant du courant de charge, qui indique le rapport entre la puissance électrique totale de charge et la puissance accumulée ainsi visée dans l'accumulateur (12) d'énergie.

7. Véhicule (10) suivant la revendication 6,
**caractérisé en ce que**
le dispositif (130) de commande de charge choisit le courant (I) de charge, de manière à optimiser le rendement de charge.

8. Véhicule (10) suivant l'une des revendications précédentes,
**caractérisé en ce que**
le dispositif (60) de pronostic,
- avant ou après l'entrée dans le tronçon (20a) de voie électrifié, détermine une première valeur (Web) d'énergie de freinage et
- pendant la circulation sur le tronçon (20a) de voie électrifié, donc avant d'atteindre le tronçon (20b) de voie suivant non électrifié, en fonction du lieu, à l'aide des données (SD) de voie du tronçon partiel à parcourir encore, ainsi qu'en tenant compte de données (FSD) mises à jour de stratégie de circulation, effectue au moins une fois un nouveau calcul et détermine au moins une valeur (Web) d'énergie de freinage mise à jour et
le dispositif (130) de commande de charge met à jour, après avoir obtenu la ou les valeurs (Web) d'énergie de freinage mises à jour, respectivement la stratégie de charge et cela de manière à ce que l'accumulateur (12) d'énergie ait, lorsque le tronçon (20b) de voie suivant non électrifié est atteint, la valeur (Esoll) d'énergie de consigne donnée à l'avance, en tenant compte de l'alimentation en retour d'énergie (Eb) de freinage pouvant être régénérée suivant la valeur (Web) d'énergie de freinage respective mise à jour.

9. Véhicule (10) suivant l'une des revendications précédentes,
**caractérisé en ce que**
le dispositif (60) de pronostic et le dispositif (130) de commande de charge forment des composants d'un système d'aide à la conduite.

10. Procédé de charge d'un accumulateur (12) interne d'énergie d'un véhicule (10), qui est équipé d'un dispositif (130) de commande de charge, d'un accumulateur (12) interne d'énergie et d'un appareil (11) de prise de courant, qui est propre à prendre de l'énergie électrique extérieure pendant la circulation sur un tronçon (20a) de voie électrifié, dans lequel l'accumulateur (12) interne d'énergie peut mettre à disposition de l'énergie accumulée pour circuler sur un tronçon (20b) de voie suivant non électrifié, dans lequel, pendant la circulation sur le tronçon (20a) de voie électrifié, en tirant parti de l'état (LST) de charge en cours de l'accumulateur (12) d'énergie et d'au moins une valeur (Web) d'énergie de freinage, qui indique l'énergie (Eb) de freinage pouvant être encore régénérée par freinage jusqu'à la fin du tronçon (20a) de voie électrifié et pouvant alimenter l'accumulateur (12) d'énergie, l'accumulateur (12) interne d'énergie est chargé, au moyen du dispositif (130) de commande de charge, de manière à avoir, lorsque le tronçon (20b) de voie suivant non électrifié est atteint, en supposant une alimentation en retour par l'énergie (Eb) de freinage pouvant être régénérée et indiquée par la valeur (Web) d'énergie de freinage, une valeur (Esoll) d'énergie de consigne donnée à l'avance,
**caractérisé en ce que**
- la au moins une valeur (Web) d'énergie de freinage a été calculée extérieurement à l'avance avant le début de la circulation sur la base de données (SD) de voie du tronçon (20a) de voie électrifié et de données (FSD) de stratégie de circulation et a été mise en mémoire dans le véhicule (10),
- la valeur (Web) d'énergie de freinage calculée à l'avance est prise en compte lors de la charge par le dispositif (130) de commande de charge,
- pour le tronçon (20a) de voie électrifié, deux ou plus de deux valeurs (Web) d'énergie de freinage rapportées à la stratégie de circulation sont mises en mémoire, et
- le dispositif (130) de commande de charge effectue la charge en fonction d'une stratégie de circulation, en tenant compte de la stratégie (FS, FS1, FS2) respective de circulation et de la valeur (Web) d'énergie de freinage correspondante rapportée à la stratégie de circulation.

11. Procédé suivant la revendication 10,
**caractérisé en ce que** l'
on détermine la valeur (Web) d'énergie de freinage avant ou après l'entrée dans le tronçon (20a) de voie électrifié, mais au moins avant d'atteindre le tronçon (20b) de voie suivant non électrifié, sur la base de données (SD) de voie du tronçon (20a) de voie électrifié et de données (FSD) de stratégie de circulation dans le véhicule (10).

12. Procédé suivant la revendication 10,
**caractérisé en ce que** l'
on détermine la valeur (Web) d'énergie de freinage avant ou après l'entrée dans le tronçon (20a) de voie électrifié, mais au moins avant d'atteindre le tronçon (20b) de voie suivant non électrifié, sur la base de données (SD) de voie du tronçon (20a) de voie électrifié et de données (FSD) de stratégie de circulation à l'extérieur du véhicule (10).

13. Procédé suivant l'une des revendications 10 à 12 précédentes,
**caractérisé en ce qu'**
un dispositif (60) de pronostic
- avant ou après l'entrée dans le tronçon (20a) de voie électrifié, détermine une première valeur (Web) d'énergie de freinage et
- pendant la circulation sur le tronçon (20a) de voie électrifié, donc avant d'atteindre le tronçon (20b) de voie suivant non électrifié, effectue, en fonction du lieu, à l'aide des données (SD) de voie du tronçon partiel à parcourir encore, ainsi qu'en tenant compte de données (FSD) de stratégie de circulation, au moins une fois un calcul nouveau et détermine au moins une valeur (Web) mise à jour d'énergie de freinage et
un dispositif (130) de commande de charge met à jour, après l'obtention de ou des valeurs (Web) d'énergie de freinage mises à jour, respectivement la stratégie de charge et cela de manière à ce que l'accumulateur (12) d'énergie ait, suivant la valeur (Web) d'énergie de freinage mise à jour respectivement, lorsque le tronçon (20b) de voie suivant non électrifié est atteint, la valeur (Esoll) d'énergie de consigne donnée à l'avance, en tenant compte de l'alimentation en retour de l'énergie (Eb) de freinage pouvant être régénérée.
